# EUROPÄISCHE PATENTSCHRIFT

(11) **EP 2 805 596 B1**
(45) Veröffentlichungstag und Bekanntmachung des Hinweises auf die Patenterteilung: **02.08.2017**
(21) Anmeldenummer: 14168274.0
(22) Anmeldetag: 14.05.2014
(51) Int. Cl.: A01C 7/08, A01C 7/20, A01C 7/06

(54) **Sämaschine**
Seeder
Semoir

(30) Priorität: 22.05.2013 DE 102013008708
(43) Veröffentlichungstag der Anmeldung: 26.11.2014
(73) Patentinhaber: PÖTTINGER Landtechnik GmbH, 4710 Grieskirchen (AT)
(72) Erfinder: Schürz, DI (FH) Christoph, 4600 Wels (AT)
(74) Vertreter: Thoma, Michael

(56) Entgegenhaltungen:
- EP-A1- 2 514 292
- US-A- 4 060 181
- US-A- 4 392 439

## Beschreibung

Die vorliegende Erfindung betrifft eine Sämaschine mit einer Körnervereinzelungsvorrichtung zum Vereinzeln der auszubringenden Körner sowie druckluftbeaufschlagbaren Saatgutleitungen zum Transportieren der vereinzelten Körner von der Körnervereinzelungsvorrichtung zu Ausbringelementen, wobei die Körnervereinzelungsvorrichtung durch Einspeiseöffnungen mit den Saatgutleitungen verbindbar ist, so dass von der Körnervereinzelungsvorrichtung in die Saatgutleitungen eingespeiste Körner vom Druckluftstrom in den Saatgutleitungen mitgerissen werden. Ein Sämaschine nach dem Oberbegriff des Anspruchs 1 ist aus der Schrift US 4,392,439 bekannt. Weitere Sämaschinen mit Körnervereinzelungsvorrichtungen sind aus den Schriften US 40 60 181 A und EP 2 514 292 A1 bekannt.

Bei herkömmlichen Einzelkornsämaschinen, mit denen hinsichtlich des Pflanzabstandes kritisches Saatgut wie Mais, Soja oder Sonnenblumen in Einzelkornablage ausgebracht wird, ist ein Körnervereinzelungsaggregat oftmals unmittelbar an den Ausbringelementen angeordnet, um die abzulegenden Körner unmittelbar vor deren Ablage zu vereinzeln, um nicht nur einen Reihenabstand, sondern auch eine Längsbeabstandung der einzelnen Körner exakt einhalten zu können. Solche unmittelbar an den Ausbringelementen vorgesehene Körnervereinzelungsvorrichtungen sind jedoch mit verschiedenen Nachteilen behaftet, insbesondere dem hohen Platzbedarf im Bereich der Ausbringelemente, der einer engen Reihenbeabstandung der Ausbringelemente entgegensteht. Dies ist insbesondere bei kombinierten Drillsaat- und Einzelkornsämaschinen von Nachteil, die aus verschiedenen Speicherbehältern gleichermaßen Einzelkornsaatgut und Drillsaatgut bzw. Saatgut und Dünger ausbringen können und hierfür eine entsprechend hohe Anzahl von Ausbringelementen aufweisen.

Insofern wurde es bereits vorgeschlagen, die Körnervereinzelungsvorrichtung nicht mehr unten an den Ausbringelementen, sondern zentral weiter oben, beispielsweise unter dem Speicherbehälter anzubringen und die vereinzelten Körner über druckluftbeaufschlagte Saatgutleitungen zu den Ausbringelementen zu transportieren. Solche Sämaschinen zeigen beispielsweise die Schriften EP 25 14 292 A1 oder die DE 103 13 180 A1, bei denen jeweils eine Körnervereinzelungsvorrichtung zentral unter dem Saatguttank angeordnet ist, von der dann druckluftbeaufschlagte Saatgutleitungen nach unten zu den Ausbringelementen führen.

Während solche Sämaschinen, bei denen die Körnervereinzelungsvorrichtung nach oben gesetzt ist und die schon vereinzelten Körner per Druckluft zu den Ausbringelementen transportiert werden, die Platzproblematik an den Ausbringelementen weitgehend lösen, ist es schwierig, den Längsabstand der in einer Reihe einzeln abgelegten Körner präzise zu steuern bzw. einzuhalten. Durch die relativ langen Saatgutleitungen zwischen Körnervereinzelungsvorrichtung und Ausbringelementen kommt es zu unterschiedlichen Längsabständen, wenn nacheinander durch eine Saatgutleitung geförderte Körner nicht exakt mit der gleichen Geschwindigkeit transportiert werden oder exakt zum gewünschten Zeitpunkt, d.h. taktgemäß in die druckluftbeaufschlagten Saatgutleitungen eingespeist werden.

Dabei zeigt es sich, dass auch bereits relativ kleinere Streuungen bei der Einspeisung eines Korns in den Druckluftstrom einer Saatgutleitung relativ größere, unerwünschte Streuungen bei der Längsbeabstandung bewirken. Wird ein vorauslaufendes Korn beispielsweise ein wenig später als beabsichtigt vom Luftstrom mitgerissen und ein nachlaufendes Korn im Gegensatz hierzu sehr früh vom Luftstrom in der Saatgutleitung mitgerissen, kommt es zu einem relativ deutlich zu kleinen Längsabstand der beiden nacheinander abgelegten Körner, da ein sozusagen zu spät eingespeistes bzw. mitgerissenes Korn diesen Rückstand auf seinem Weg durch die Saatgutleitung nicht mehr aufholen kann.

Der vorliegenden Erfindung liegt daher die Aufgabe zugrunde, eine verbesserte Sämaschine der genannten Art zu schaffen, die Nachteile des Standes der Technik vermeidet und Letzteren in vorteilhafter Weise weiterbildet. Insbesondere soll auch bei einer relativ großen Beabstandung von Körnervereinzelungsvorrichtung zu Ausbringelementen bzw. relativ langen Saatgutleitungen eine exakte Längsbeabstandung der in einer Reihe abgelegten Körner erreicht werden.

Erfindungsgemäß wird die genannte Aufgabe durch eine Sämaschine gemäß Anspruch 1 gelöst. Bevorzugte Ausgestaltungen der Erfindung sind Gegenstand der abhängigen Ansprüche.

Es wird also vorgeschlagen, den Einspeise- bzw. Übergabebereich der Saatgutleitung strömungstechnisch zu optimieren und wirbelarm bzw. möglichst verwirbelungsfrei auszubilden, so dass von dem Vereinzeler in den Druckluftstrom gelangende Körner möglichst gleichmäßig und störungsfrei mitgerissen werden und eine im Einspeisebereich entstehende Verungleichmäßigung vermieden wird. Der Injektor- bzw. Übergabebereich wird insbesondere derart gestaltet, dass der Druckluftstrom weitgehend verwirbelungsfrei bzw. verwirbelungsarm an der Einspeiseöffnung, durch die die Körner vom Vereinzeler in die Saatgutleitung gelangen, vorbeiströmen kann. Erfindungsgemäß besitzen die Saatgutleitungen im Übergabebereich zwischen Kornvereinzelungsvorrichtung und Saatgutleitungen jeweils zumindest eine Bypassöffnung zum Ablassen von Druckluft. Durch eine solche zusätzlich zur Einspeiseöffnung vorgesehene Öffnung der Saatgutleitung kann überschüssiger Druck im Übergabebereich und somit Wirbel im Bereich der Einspeiseöffnung, die die Längsverteilung beeinträchtigen, vermieden werden. Die Erfindung geht dabei von der Überlegung aus, dass der Druckluftstrom in der Saatgutleitung ohne eine solche Bypassöffnung aufgrund des Druckgefälles im Bereich der Einspeiseöffnung verwirbelt bzw. ein Teil des Druckluftstroms in die Einspeiseöffnung eindringt und sich dort verwirbelt, was zu ungewollten Verzögerungen oder auch Beschleunigungen und damit zu nicht kontrollierbaren Ungleichmäßigkeiten beim Einspeisen der Körner in die jeweilige Saatgutleitung führt. Durch zumindest eine Bypassöffnung zusätzlich zu der genannten Einspeiseöffnung im Übergabebereich kann überschüssiger Druck abgebaut und eine stärkere Verwirbelung des Druckluftstroms an der Einspeiseöffnung vermieden werden, so dass die in den Druckluftstrom gelangenden Körner kontrolliert und damit gleichmäßig mitgenommen werden und Unregelmäßigkeiten in der Längsverteilung vermieden werden.

Die genannte Bypassöffnung ist dabei derart ausgebildet, dass der Großteil bzw. der Hauptstrom der Druckluftströmung durch die Saatgutleitungen zu den jeweiligen Ausbringelementen geht und nur ein kleinerer, sozusagen überschüssiger Teil des Druckluftstroms in den Bypasskanal abzweigt. Insbesondere kann die genannte Bypassöffnung einen deutlich kleineren Durchmesser besitzen als der Hauptkanal der Saatgutleitung. Insbesondere kann die Querschnittsfläche der Bypassöffnung nur einen Bruchteil, beispielsweise weniger als 50% und insbesondere weniger als 20% der Querschnittsfläche des Hauptkanals der Saatgutleitung betragen.

Die Bypassöffnung kann dabei grundsätzlich verschieden positioniert sein bzw. an verschiedenen Positionen von der Saatgutleitung abgehen. Um Verwirbelungen im Bereich der Einspeiseöffnung möglichst zu vermeiden, kann die genannte Bypassöffnung ein Stück weit von der Einspeiseöffnung beabstandet sein, insbesondere in Längsrichtung der Saatgutleitung und der Einspeiseöffnung nicht unmittelbar gegenüberliegen, dabei vorteilhafterweise jedoch immer noch im Übergabebereich des Injektors angeordnet sein, in dem sich die Querschnittsfläche noch ändert und auf den Querschnitt zugeht bzw. den Querschnitt annimmt, den die Saatgutleitung dann über den größten Teil ihrer Länge bis zu den Ausbringelementen beibehält.

Insbesondere kann die zumindest eine Bypassöffnung stromab der Einspeiseöffnung angeordnet sein, beispielsweise im Bereich einiger mm bis einiger cm und vorteilhafterweise weniger als 30 cm stromab der Einspeiseöffnung in den Druckluftstrom. Insbesondere kann die Bypassöffnung noch im Bereich eines Injektorelements realisiert sein, an dessen Ausgangsstutzen dann eine schlauch- oder rohrförmige Saatgutleitung aufgesteckt ist.

Um Verwirbelungen im Übergabebereich aufgrund eines Druckgefälles zwischen der Saatgutleitung und der Vereinzelungsvorrichtung besonders effizient zu reduzieren, mündet die Bypassöffnung in die Körnervereinzelungsvorrichtung hinein, insbesondere in einen von einem Gehäuse umgebenen Innenraum der Körnervereinzelungsvorrichtung. Hierdurch entweicht die durch die Bypassöffnung austretende Druckluft in die Körnervereinzelungsvorrichtung. Die Erfindung geht dabei von der Überlegung aus, dass die in die Körnervereinzelungsvorrichtung eingespeiste Bypassluft aus der Körnervereinzelungsvorrichtung auch wieder austreten muss, und zwar insbesondere über die Einspeiseöffnung zurück in die Saatgutleitung, so dass sich ein Bypasskreislauf bildet, der die Einspeiseöffnung spült und über die Einspeiseöffnung eingespeiste Körner sanft in den Druckluftstrom durch die Saatgutleitung hineinzieht.

Um zu verhindern, dass Körner durch die Bypassöffnung den falschen Weg nehmen, kann die Bypassöffnung im Querschnitt kleiner als der Durchmesser der Körner sein, insbesondere auch kleiner als ein minimaler Durchmesser unregelmäßig geformter Körner. Je nach zu erzielendem Druckabbau bzw. abzublasender Druckluft kann die Querschnittsfläche der Bypassöffnung jedoch auch größer sein als der Korndurchmesser, wobei in diesem Fall die Bypassöffnung durch eine gitter- oder netzartige Struktur abgedeckt sein kann, um den ungewollten Körneraustritt durch die Bypassöffnung zu verhindern.

Um den Körnerweg durch die Saatgutleitung bzw. das Mitreißen der Körner im Druckluftstrom der Saatgutleitung möglichst wenig zu behindern oder zu beeinträchtigen, kann in vorteilhafter Weiterbildung der Erfindung vorgesehen sein, dass die Bypassöffnung von einer Oberseite der Saatgutleitung abgeht. Dies kann insbesondere dann vorteilhaft sein, wenn die Bypassöffnung sehr nahe an der Einspeiseöffnung angeordnet ist, da es in diesem Fall regelmäßig auftreten kann, dass das im Luftstrom mitgerissene Korn relativ nahe an der unteren Wandung der Saatgutleitung transportiert wird. Je nach Positionierung der Bypassöffnung kann diese jedoch auch an Seitenwangen der Saatgutleitung oder ggf. auch vom Boden der Saatgutleitung abgehen.

Um das Mitreißen der Körner im Übergabebereich zwischen Saatgutleitung und Körnervereinzelungsvorrichtung zu verbessern, kann im Übergabebereich der Saatgutleitungen in Weiterbildung der Erfindung ein Strömungsleitorgan vorgesehen sein, das der Druckluftströmung im Übergabebereich eine spezielle Richtung gibt und/oder die Strömungsgeschwindigkeit des Druckluftstroms verändert und/oder den Strömungsquerschnitt verändert, jeweils bei Betrachtung im Vergleich zu dem restlichen, sehr viel längeren Abschnitt der Saatgutleitung zwischen Übergabebereich und Ausbringelement. Insbesondere kann das genannte Strömungsleitorgan im Querschnitt und/oder in der Konturierung seiner Umfangswandung vom restlichen Saatgutleitungsabschnitt abweichen.

Insbesondere kann das Strömungsleitorgan eine Düse bilden, die eine Querschnittsverengung besitzt und die Strömungsgeschwindigkeit durch die Saatgutleitung im Übergabebereich spürbar erhöht, um die eingespeisten Körner besser mitzureißen. Vorteilhafterweise kann die Einspeiseöffnung etwa auf den kleinsten Düsenquerschnitt und/oder in einen Abschnitt höchster Strömungsgeschwindigkeit münden, beispielsweise kurz hinter bzw. stromab des kleinsten Düsenquerschnitts.

Die zuvor genannte Bypassöffnung kann vorteilhafterweise im Auslaufbereich bzw. einem stromabwärtigen Abschnitt des Strömungsleitorgans oder im Anschluss an den Auslauf des Strömungsleitorgans angeordnet sein, insbesondere ein Stück weit stromab des Bereichs höchster Strömungsgeschwindigkeit, vorteilhafterweise aber immer noch im Übergabebereich und/oder in einem Diffusorbereich des Strömungsleitorgans.

Um die Körner möglichst gleichmäßig in den Druckluftstrom einzuspeisen und mitzureißen, können die Saatgutleitungen in Weiterbildung der Erfindung im Übergabebereich einen schräg nach unten geneigten Verlauf besitzen, wobei die Einspeiseöffnungen von oben her mantelflächenseitig in die geneigten Saatgutleitungen münden können. Beispielsweise können die Saatgutleitungen im Übergabebereich unter einem Winkel von etwa 10° bis 80°, insbesondere etwa 20° bis 40° zur Horizontalen geneigt schräg nach unten verlaufen. Durch eine solche Schrägstellung bzw. Steigung der Saatgutleitungen kann einerseits in der Körnervereinzelungsvorrichtung die Schwerkraft genutzt werden, um die Körner aus der Körnervereinzelungsvorrichtung abzugeben bzw. auszugeben. Andererseits unterstützt die Schwerkraft auch noch im Übergabebereich bzw. in der Saatgutleitung die Mitnahme durch den Druckluftstrom.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Reihensämaschine nach einer vorteilhaften Ausführung der Erfindung, bei der eine im Bodenbereich eines Speichers angeordnete Körnervereinzelungsvorrichtung über druckluftbeaufschlagte Saatgutleitungen mit Ausbringelementen verbunden ist,
- Fig. 2:: eine schematische, perspektivische Darstellung der einer Saatgutleitung zugeordneten Körnervereinzelungsvorrichtung mit dem daran angeschlossenen Injektorelement zum Einspeisen der vereinzelten Körner in den Druckluftstrom durch die Saatgutleitung,
- Fig. 3:: eine Seitenansicht der Vereinzelungs-/Injektorbaugruppe aus Fig. 2,
- Fig. 4:: einen Querschnitt durch die Vereinzelungs-/Injektorbaugruppe aus Fig. 3, und
- Fig. 5:: einen Längsschnitt durch die Körnervereinzelungsvorrichtung und den Übergabebereich in die Druckluftströmung in der Saatgutleitung aus den vorhergehenden Figuren, die die Bypassöffnung zusätzlich zur Einspeiseöffnung zeigt.

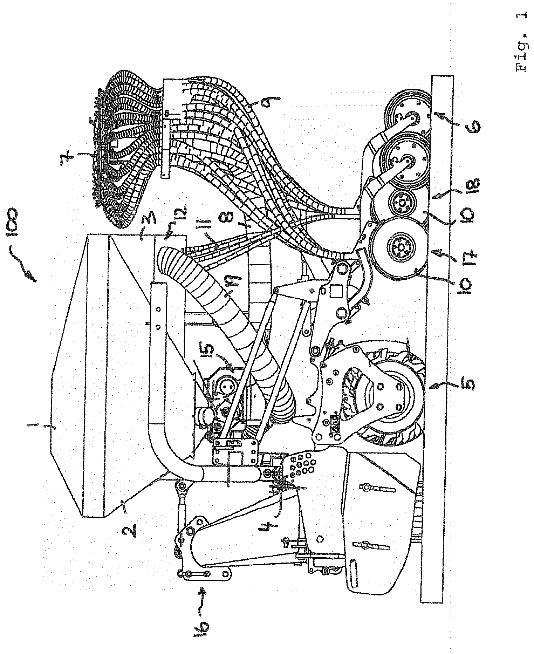

Wie Fig. 1 zeigt, kann die Sämaschine 100 sowohl eine Einzelkornablage- als auch eine Drillsaatfunktion besitzen bzw. eine Kombination aus Einzelkornsämaschine und Drillsaatmaschine bilden, was jedoch keineswegs zwingend ist. Die Sämaschine könnte auch als reine Einzelkornsämaschine ausgebildet sein.

Wie Fig. 1 zeigt, kann die Sämaschine 100 dabei als Anbaugerät ausgeführt sein, das in an sich bekannter Weise über einen Anbaubock 16 an einen Schlepper anbaubar sein kann. Auf einem mehrgliedrigen Maschinenrahmen 4 kann ein Speicherbehälter bzw. Tank 1 angeordnet sein, der zwei separate Speicherräume 2 und 3 umfassen kann, wobei aber auch zwei separate Tanks vorgesehen sein könnten. Der Speicherraum 2, in dem Drillsaatgut wie beispielsweise Weizen oder Dünger gespeichert werden kann, beschickt über eine pneumatische Fördereinrichtung 15, die beispielsweise ein Gebläse umfassen kann, und eine Speiseleitung 8 einen Verteilerkopf 7, von dem aus das Drillsaatgut oder Dünger verteilt und über Verteilerleitungen 9 zu Ausbringelementen 10 geführt wird. Die Ausbringelemente 10 können geeignete Scharkörper umfassen, um das Saatgut in Furchen ablegen zu können. Wie Fig. 1 weiterhin zeigt, können den Ausbringelementen 10 vorauslaufend angeordnete Bodenaggregate 5 beispielsweise in Form eines Grubbers, einer Scheibenegge oder anderer den Boden vorbereitender Bodenbearbeitungswerkzeuge und/oder nachlaufende Bodenbearbeitungsaggregate 6 beispielsweise in Form von Andruckwalzen, Zustreichern oder dergleichen vorgesehen sein.

Die zuvor genannten Ausbringelemente 10 können in zumindest einer Reihe quer zur Fahrtrichtung voneinander beabstandet angeordnet sein, wobei in der gezeichneten Ausführungsform zwei Reihen 17 und 18 solcher Ausbringelemente hintereinander versetzt angeordnet sind, vgl. Fig. 1.

Von dem zweiten Speicherraum 3 des Tanks 1 wird Saatgut für die Einzelkornablage ausgegeben, wobei hierfür am Bodenbereich des Speicherraums 2 bzw. ein Stück unterhalb des Speicherraums 3 eine Körnervereinzelungsvorrichtung 12 vorgesehen ist, von der aus vereinzelte Körner über Saatgutleitungen 11 zu den am Boden laufenden Ausbringelementen 10 transportiert werden. Die genannten Saatgutleitungen 11 für die Einzelkornablage können zu einigen der genannten Ausbringelementen 10 oder auch zu allen der Ausbringelementen 10 führen oder auch zu zusätzlichen Ausbringelementen führen, die vom Verteilerkopf 7 her nicht beschickbar sind.

Wie die Figuren zeigen, erfolgt auch der Transport durch die Saatgutleitungen 11 für die Einzelkornablage pneumatisch. Von der pneumatischen Fördereinrichtung 15 beispielsweise in Form eines Gebläses oder auch einer anderen Drucklufterzeugereinheit wird Druckluft über eine Druckluftzufuhrleitung 19 zu den Saatgutleitungen 11 geführt, die mit den Ausgängen der Körnervereinzelungsvorrichtung 12 verbunden sind.

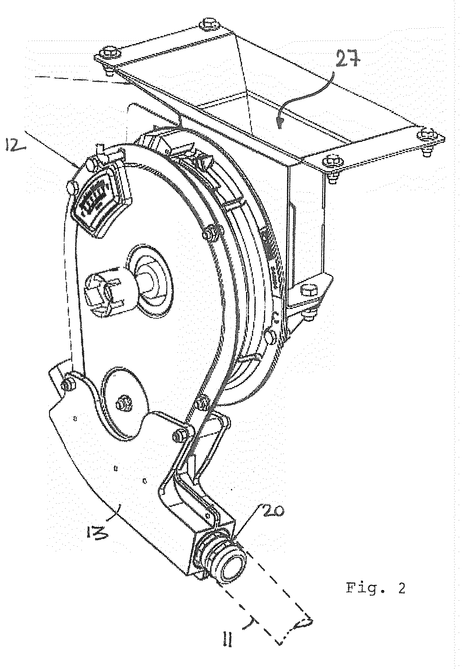

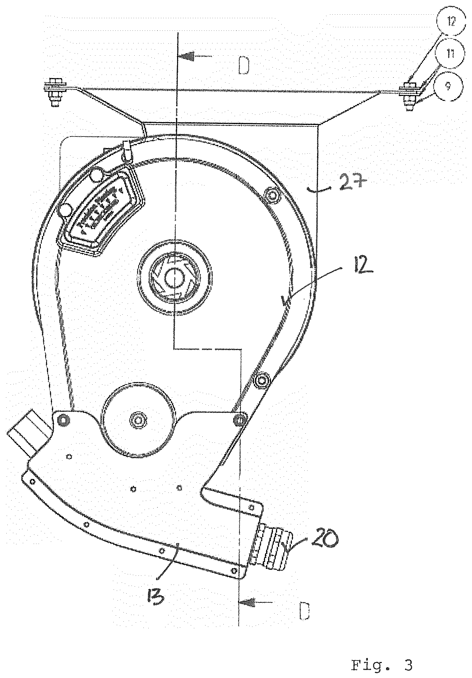

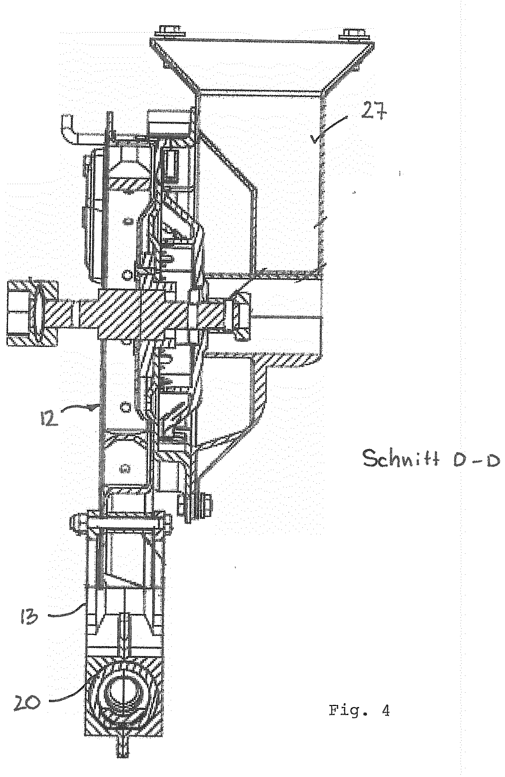

Wie die Figuren 2 bis 5 zeigen, werden die von der Körnervereinzelungsvorrichtung 12 vereinzelten Körner über ein Injektorelement 13 in den Druckluftstrom durch die Saatgutleitungen 11 eingespeist bzw. daran übergeben, wobei die Injektorelemente 13 letztlich einen Teil der Saatgutleitungen 11 bilden. Eingangsseitig können an Anschlussstutzen der Injektorelemente 13 die Druckluftzufuhrleitung 19 angeschlossen werden, während ausgangsseitig an Ausgangsstutzen 20 schlauch- oder rohrförmige Abschnitte bzw. Teile der Saatgutleitungen 11 angeschlossen werden können.

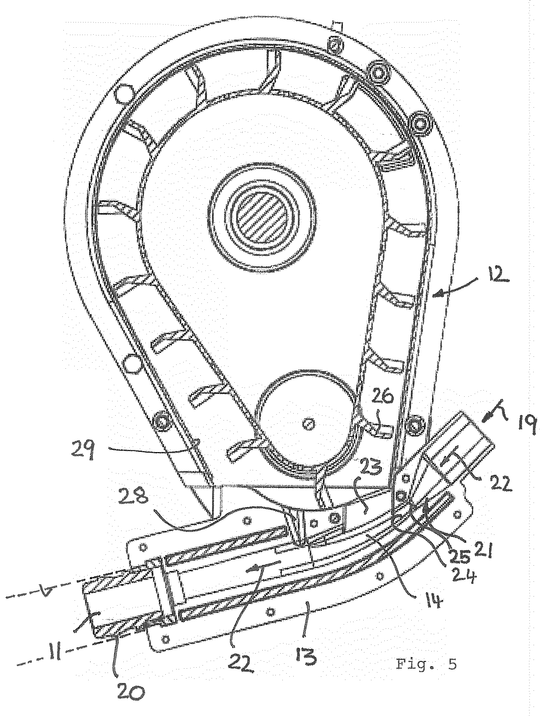

In dem von dem Injektorelement 13 gebildeten Übergabebereich 14 erstreckt sich die Längsrichtung der jeweiligen Saatgutleitung 11 in Strömungsrichtung betrachtet schräg nach unten, wobei die Neigung gegenüber der Horizontalen, wie Fig. 5 zeigt, im Bereich von etwa 20 bis 30° betragen kann. Wie Fig. 5 zeigt, kann die Saatgutleitung im Übergabebereich 14 dabei eine leichte Krümmung besitzen, beispielsweise in ihrer Neigung in Förderrichtung betrachtet flacher werden.

In dem besagten Übergabebereich 14 besitzt die Saatgutleitung 11 ein Strömungsleitorgan 21 zum Beschleunigen und/oder Formen des Druckluftstroms 22, der durch die Saatgutleitung 11 hindurch an einer Einspeiseöffnung 23 vorbeistreicht. Insbesondere kann das genannte Strömungsleitorgan 21 eine Düse 24 bilden, deren Querschnittsfläche sich in Strömungsrichtung betrachtet zunächst verjüngt bis zu einem Querschnitt kleinsten Durchmessers 25 und sich sodann wieder erweitert. Durch die genannte Düse 24 wird der Druckluftstrom im Übergabebereich 14 deutlich beschleunigt, um die eingespeisten Körner besser mitreißen zu können.

Die Körnervereinzelungsvorrichtung 12 kann vorteilhafterweise verschieden ausgebildet sein und beispielsweise pneumatisch oder mechanisch arbeiten, beispielsweise in Form einer Zellenradschleuse ausgebildet sein oder das Saatgut auch pneumatisch vereinzeln. Beispielsweise kann die Körnervereinzelungsvorrichtung 12, wie die gezeichneten Ausführungsform verdeutlicht, umlaufende Vereinzelungsschaufeln 26 umfassen, die die über einen Einlass 27 aus dem Speicherraum 3 zugeführten Körner vereinzeln und eine aufrechte Umlaufbahn überstreichen. Ein Auslass bzw. Abgabebereich der Körnervereinzelungsvorrichtung 12 kann in einem Bodenbereich der genannten Umlaufbahn liegen und von oben her auf die jeweilige Saatgutleitung 11 münden, die an ihrer Oberseite eine Einspeiseöffnung 23 umfassen kann, über die die Körnervereinzelungsvorrichtung 12 mit der Saatgutleitung 11 verbunden ist.

Die genannte Einspeiseöffnung 23 mündet dabei in den Düsenbereich des Injektorelements 13, insbesondere etwa kurz bzw. unmittelbar hinter dem Querschnitt kleinsten Durchmessers 25 der Düse 24, in dem die Druckluftströmung näherungsweise ihre höchste Geschwindigkeit zeigt. Die Einspeiseöffnung 23 und/oder der Auslassbereich der Körnervereinzelungsvorrichtung 12 können dabei derart ausgebildet sein, dass vereinzelte Körner näherungsweise senkrecht nach unten in den Druckluftstrom fallen, der durch die Saatgutleitung 11 streicht.

Um zu verhindern, dass sich im Bereich der Einspeiseöffnung 23 und/oder im Übergabebereich 14 übermäßige Verwirbelungen der Druckluft bilden, besitzt die Saatgutleitung 11 eine Bypassöffnung 28, die ein kleines Stück stromab der Einspeiseöffnung 23 mantelflächenseitig aus der Druckluft bzw. Saatgutleitung 11 führt. Insbesondere kann die genannte Bypassöffnung 28 mit einem Innenraum der Körnervereinzelungsvorrichtung 12 kommunizieren, insbesondere in einen Bodenbereich des von einem Gehäuse 29 umschlossenen Innenraums führen, in dem die genannten Vereinzelungsschaufeln 26 umlaufen, und zwar vorteilhafterweise ein Stück weit stromab der genannten Einspeiseöffnung 23, die ebenfalls in den genannten Innenraum führt.

Wie Fig. 5 zeigt, kann die genannte Bypassöffnung 28 in Form eines Schlitzes ausgebildet sein, der den Hauptkanal der Saatgutleitung 11 mit dem Inneren des Gehäuses 29 der Körnervereinzelungsvorrichtung 12 verbindet, wobei der Querschnitt der Bypassöffnung 28 nur einen Bruchteil der Querschnittsfläche der Saatgutleitung 11 bzw. des Hauptkanals der Saatgutleitung 11 beträgt, beispielsweise weniger als 10% Querschnittsfläche des Hauptkanals besitzen kann.

Wie Fig. 1 zeigt, kann die Körnervereinzelungsvorrichtung 12 vom Boden beabstandet nach oben gesetzt sein, insbesondere unmittelbar unter dem Tank 1 positioniert sein. Die Saatgutleitungen 11 können dementsprechend mehr oder minder lang ausgebildet sein, beispielsweise Längen von 0,5 m oder mehr besitzen. Die Körnervereinzelungsvorrichtung 12 kann dabei mehrere Körnervereinzelungseinheiten, wie sie die Figuren 2 bis 5 zeigen, umfassen, die jeweils einer Saatgutleitung zugeordnet sind und mit einem jeweiligen Injektorelement 13 eine Vereinzelungs-/ Injektorbaugruppe bilden.

## Patentansprüche

1. Sämaschine mit einer Körnervereinzelungsvorrichtung (12) zum Vereinzeln der auszubringenden Körner sowie druckluftbeaufschlagbaren Saatgutleitungen (11) zum Transportieren der vereinzelten Körner von der Körnervereinzelungsvorrichtung (12) zu Ausbringelementen (10), wobei die Körnervereinzelungsvorrichtung (12) durch Einspeiseöffnungen (23) mit den Saatgutleitungen (11) verbindbar ist, so dass von der Körnervereinzelungsvorrichtung (12) in die Saatgutleitungen (11) eingespeiste Körner vom Druckluftstrom (22) in den Saatgutleitungen (11) mitgerissen werden, wobei die Saatgutleitungen (11) im Übergabebereich (14) zwischen der Körnervereinzelungsvorrichtung (12) und den Saatgutleitungen (11) jeweils zumindest eine Bypassöffnung (28) zum Ablassen von Druckluft besitzen, **dadurch gekennzeichnet, dass** die Bypassöffnung (28) in die Körnervereinzelungsvorrichtung (12) mündet und/oder mit einem Innenraum der Körnervereinzelungsvorrichtung (12) strömungsverbunden ist.

2. Sämaschine nach dem vorhergehenden Anspruch, wobei die Bypassöffnung (28) stromab der Einspeiseöffnung (23) angeordnet ist.

3. Sämaschine nach einem der vorhergehenden Ansprüche, wobei die Bypassöffnung (28) in einen Bodenabschnitt des Innenraums der Körnervereinzelungsvorrichtung (12) und/oder benachbart zur Einspeiseöffnung (23) mündet.

4. Sämaschine nach einem der vorhergehenden Ansprüche, wobei die Bypassöffnung (28) von einer Oberseite der Mantelfläche der Saatgutleitung (11) abzweigt.

5. Sämaschine nach einem der vorhergehenden Ansprüche, wobei im Übergabebereich der Saatgutleitungen (11) ein Strömungsleitorgan (21) vorgesehen ist, das im Querschnitt und/oder in seiner Umfangskonturierung vom restlichen Saatgutleitungsabschnitt (30) abweicht, und die Einspeiseöffnungen (23) jeweils auf den vom Strömungsleitorgan (21) geformten und/oder beeinflussten Druckluftstrom mündet.

6. Sämaschine nach dem vorhergehenden Anspruch, wobei das Strömungsleitorgang (21) eine Düse (24) bildet, wobei vorzugsweise die Einspeiseöffnung (23) auf den Düsenquerschnitt kleinsten Durchmessers und/oder in einen Bereich höchster Strömungsgeschwindigkeit mündet.

7. Sämaschine nach einem der beiden vorhergehenden Ansprüche, wobei die Bypassöffnung (28) in einem stromabwärtigen Auslaufabschnitt des Strömungsleitorgans (21) und/oder anschließend an das stromabwärtige Ende der Strömungsleitorgans (21) angeordnet ist, insbesondere stromab des Bereichs höchster Strömungsgeschwindigkeit im Übergabebereich (14) und/oder in einem Diffusorbereich des Strömungsleitorgans (21).

8. Sämaschine nach einem der vorhergehenden Ansprüche, wobei die Saatgutleitungen (11) im Übergabebereich (14) einen schräg nach unten geneigten Verlauf besitzen und die Einspeiseöffnungen (23) von oben her mantelflächenseitig in die Saatgutleitungen (11) münden.

9. Sämaschine nach einem der vorhergehenden Ansprüche, wobei jeder Saatgutleitung (11) eine eigene Körnervereinzelungseinheit zugeordnet ist, die zu einer zentralen Körnervereinzelungsvorrichtung (12) zusammengefasst sind.

10. Sämaschine nach einem der vorhergehenden Ansprüche, wobei die Körnervereinzelungsvorrichtung (12) von den Ausbringelementen (10) beabstandet und nach oben gesetzt angeordnet ist, insbesondere an den Bodenbereich eines Speicherraums (3) für das Saatgut anschließt.

## Claims

1. A seeder having a grain separation apparatus (12) for separating the grains to be sown and having seed lines (11) that can be acted on by compressed air for transporting the separated grains from the grain separation apparatus (12) to sowing elements (10), wherein the grain separation apparatus (12) is connectable to the seed lines (11) by feed openings (23) so that grains fed into the seed lines (11) from the grain separation apparatus (12) are entrained by the compressed air flow (22) in the seed lines (11), wherein the seed lines (11) each have at least one bypass opening (28) for releasing compressed air in the transfer region (14) between the grain separation apparatus (12) and the seed lines (11), **characterized in that** the bypass opening (28) opens into the grain separation apparatus (12) and/or is in flow communication with an inner space of the grain separation apparatus (12).

2. A seeder in accordance with the preceding claim, wherein the bypass opening (28) is arranged downstream of the feed opening (23).

3. A seeder in accordance with one of the preceding claims, wherein the bypass opening (28) opens into a base section of the inner space of the grain separation apparatus (12) and/or adjacent to the feed opening (23).

4. A seeder in accordance with one of the preceding claims, wherein the bypass opening (28) branches off from an upper side of the jacket surface of the seed line (11).

5. A seeder in accordance with one of the preceding claims, wherein a flow conducting member (21) is provided in the transfer region of the seed lines (11) and deviates with its cross-section and/or its circumferential contouring from the remaining seed line section (30); and wherein the feed openings (23) each open on the compressed air flow shaped and/or influenced by the flow conducting member (21).

6. A seeder in accordance with the preceding claim, wherein the flow conducting member (21) forms a nozzle (24); wherein the feed opening (23) preferably opens on the nozzle cross-section of the smallest diameter and/or into a region of the highest flow speed.

7. A seeder in accordance with one of the two preceding claims, wherein the bypass opening (28) is arranged in a downstream run-out section of the flow conducting member (21) and/or adjoining the downstream end of the flow conducting member (21), in particular downstream of the region of the highest flow speed in the transfer region (14) and/or in a diffuser region of the flow conducting member (21).

8. A seeder in accordance with one of the preceding claims, wherein the seed lines (11) have a slopingly downwardly inclined extent in the transfer region (14); and wherein the feed openings (23) open from above into the seed lines (11) at the jacket surface side.

9. A seeder in accordance with one of the preceding claims, wherein a separate grain separation unit is associated with each seed line (11), said separate grain separation units being combined into a central grain separation apparatus (12).

10. A seeder in accordance with one of the preceding claims, wherein the grain separation apparatus (12) is arranged spaced apart and upwardly set from the sowing elements (10) and in particular adjoins the base region of a storage space (3) for the seed.

## Revendications

1. Semoir comprenant un dispositif de séparation des graines (12) destiné à séparer les graines à mettre en terre, ainsi que des conduites de semences (11) pouvant être alimentées en air comprimé et destinées au transport des graines séparées du dispositif de séparation des graines (12) à des éléments de mise en terre (10), le dispositif de séparation des graines (12) pouvant être relié aux conduites de semences (11) par des ouvertures d'alimentation (23), de telle sorte que des graines alimentées depuis le dispositif de séparation des graines (12) dans les conduites de semences (11) sont emportées par le flux d'air comprimé (22) dans les conduites de semences (11), les conduites de semences (11) possédant, dans la zone de transfert (14) entre le dispositif de séparation des graines (12) et les conduites de semences (11) respectivement au moins une ouverture de dérivation (28) pour évacuer de l'air comprimé, **caractérisé en ce que** l'ouverture de dérivation (28) débouche dans le dispositif de séparation des graines (12) et/ou est en liaison d'écoulement avec un espace intérieur du dispositif de séparation des graines (12).

2. Semoir selon la revendication précédente, dans lequel l'ouverture de dérivation (28) est disposée en aval de l'ouverture d'alimentation (23).

3. Semoir selon l'une des revendications précédentes, dans lequel l'ouverture de dérivation (28) débouche dans une partie de fond de l'espace intérieur du dispositif de séparation des graines (12) et/ou de manière adjacente à l'ouverture d'alimentation (23).

4. Semoir selon l'une des revendications précédentes, dans lequel l'ouverture de dérivation (28) bifurque depuis une face supérieure de la surface d'enveloppe de la conduite de semences (11).

5. Semoir selon l'une des revendications précédentes, dans lequel dans la zone de transfert des conduites de semences (11), un organe de guidage d'écoulement (21) est prévu, dont la section transversale et/ou le contour périphérique diffère du reste de la partie de conduite de semences (30), et les ouvertures d'alimentation (23) débouchent respectivement sur le flux d'air comprimé formé et/ou influencé par l'organe de guidage d'écoulement (21).

6. Semoir selon la revendication précédente, dans lequel l'organe de guidage d'écoulement (21) forme une buse (24), l'ouverture d'alimentation (23) débouchant de préférence sur la section transversale de buse ayant le diamètre le plus faible et/ou dans une zone de vitesse d'écoulement la plus élevée.

7. Semoir selon l'une des deux revendications précédentes, dans lequel l'ouverture de dérivation (28) est disposée dans une partie de sortie côté aval de l'organe de guidage d'écoulement (21) et/ou contiguë à l'extrémité côté aval de l'organe de guidage d'écoulement (21), en particulier en aval de la zone de vitesse d'écoulement la plus élevée dans la zone de transfert (14) et/ou dans une zone de diffuseur de l'organe de guidage d'écoulement (21).

8. Semoir selon l'une des revendications précédentes, dans lequel dans la zone de transfert (14), les conduites de semences (11) s'étendent inclinées vers le bas et les ouvertures d'alimentation (23) débouchent par le haut côté surface d'enveloppe dans les conduites de semences (11).

9. Semoir selon l'une des revendications précédentes, dans lequel à chaque conduite de semences (11) est associée une unité de séparation des graines propre, qui sont rassemblées en un dispositif central de séparation des graines (12).

10. Semoir selon l'une des revendications précédentes, dans lequel le dispositif de séparation des graines (12) est disposé espacé des éléments de mise en terre (10) et placé vers le haut, et est en particulier contigu à la zone de fond d'un espace de stockage (3) pour les semences.
